(19) Europäisches Patentamt
European Patent Office
Office européen des brevets

(11) **EP 2 212 498 B1**

(12) **EUROPÄISCHE PATENTSCHRIFT**

(45) Veröffentlichungstag und Bekanntmachung des Hinweises auf die Patenterteilung:
**29.01.2014 Patentblatt 2014/05**

(21) Anmeldenummer: **08785310.7**

(22) Anmeldetag: **01.08.2008**

(51) Int Cl.:
**E05F 15/00** *(2006.01)*        **G01S 17/08** *(2006.01)*
**E06B 9/88** *(2006.01)*

(86) Internationale Anmeldenummer:
**PCT/EP2008/006376**

(87) Internationale Veröffentlichungsnummer:
**WO 2009/052879 (30.04.2009 Gazette 2009/18)**

(54) **VERFAHREN UND EINRICHTUNG ZUR STEUERUNG EINES VERTIKAL ODER HORIZONTAL BEWEGTEN TORES UNTER ABSICHERUNG DER TORSCHLIESSEBENE GEGENÜBER HINDERNISSEN**

METHOD OF, AND DEVICE FOR, CONTROLLING A VERTICALLY OR HORIZONTALLY MOVING DOOR, WITH THE DOOR-CLOSING PLANE BEING SAFEGUARDED IN RELATION TO OBSTRUCTIONS

PROCÉDÉ ET DISPOSITIF DE COMMANDE D'UNE PORTE DÉPLACÉE VERTICALEMENT OU HORIZONTALEMENT AVEC SÉCURISATION DU PLAN DE FERMETURE DE PORTE PAR RAPPORT À DES OBSTACLES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **18.10.2007 DE 102007050334**

(43) Veröffentlichungstag der Anmeldung:
**04.08.2010 Patentblatt 2010/31**

(73) Patentinhaber: **Efaflex Tor- und Sicherheitssysteme GmbH & Co. KG
84079 Bruckberg (DE)**

(72) Erfinder: **BARTOLE, Dieter
84091 Attenhofen (DE)**

(74) Vertreter: **Kuhnen & Wacker
Patent- und Rechtsanwaltsbüro
Prinz-Ludwig-Straße 40A
85354 Freising (DE)**

(56) Entgegenhaltungen:
| | |
|---|---|
| EP-A- 0 676 524 | EP-A- 1 619 469 |
| WO-A-2006/111365 | DE-U1- 29 901 664 |
| US-A1- 2003 160 155 | US-A1- 2006 086 895 |

## Beschreibung

Die Erfindung betrifft ein Verfahren und eine Einrichtung zur Absicherung der Torschließebene eines Tores oder anderen Verschlusselementes, welches eine Öffnung durch Bewegung in einer vertikalen oder horizontalen Ebene verschließt.

Es ist allgemein bekannt, dass bei automatisch betätigten Toren oder Türen Sicherheitsvorkehrungen getroffen werden müssen, damit Hindernisobjekte oder Personen nicht von der bewegten Torschließkante getroffen werden und damit beschädigt bzw. verletzt werden können.

Zu diesem Zweck hat man bekanntermaßen an den Stoßkanten automatisch betätigter Tore bzw. Türen Berührungs-Kantenabsicherungen angeordnet, welche bei Auftreten einer Gegenkraft (Detektion eines Hindernisses) den Torantrieb oder Türantrieb stillsetzen bzw. sogar ein "Freifahren" im Sinne einer Fahrrichtungsumkehr bewirken.

Eine andere bekannte Lösung, welche diesen Schutz gewährleistet, besteht darin, knapp vor und hinter der Torschließebene Lichtschranken bzw. Lichtgitter, bestehend aus einer Vielzahl von Lichtschranken, anzubringen und dadurch beidseits der Torkante einen Sicherheits-Lichtvorhang zu erzeugen.

Ein sehr vorteilhaftes System dies zu bewerkstelligen, wobei ein sequentielles Unberücksichtigtlassen bestimmter Lichtschranken vorgesehen ist, mit der Folge, dass mit nur einem Lichtgitter innerhalb der Torschließebene selbst operiert werden kann, beschreibt die EP 0 902 158.

Eine weitere Möglichkeit der Absicherung besteht darin, oberhalb der Tor- oder Türöffnung Sensoren anzubringen, die jeweils knapp vor der Torschließebene ein Sicherheitsfeld erzeugen, das bis zum Boden reicht und auch eine räumliche Ausdehnung in die Tiefe haben kann. Gebräuchlich sind hier Infrarot- oder Ultraschallsensoren, sowie Radarsensoren.

Eine weitere Möglichkeit ist, bereits ins Vorfeld der Toröffnung hinein zu detektieren und so die Annäherung von Objekten oder Personen zu erkennen. Eine sichere, vorteilhafte Methode hierzu beschreibt die EP 1 470 314.

Der Nachteil taktiler, also auf eine Objektberührung ansprechender Systeme liegt darin, dass es auf alle Fälle zu einer Berührung kommt, bevor der Sensor ein Stilllegen bzw. die Umkehr der Bewegungsrichtung des Torantriebs bewirken kann. Gegebenenfalls kommt es dadurch zumindest zu leichten Verletzungen oder Beschädigungen.

Lösungen mit Lichtschranken und Lichtgittern haben den Nachteil, dass es durch Fremdlichteinflüsse, Verschmutzungen bzw. unpräzise Montage zu Ausfällen kommt. Der konstruktive Aufwand ist hoch, betrachtet man die Tatsache, dass zumindest zwei Systemkomponenten angebracht werden müssen, nämlich Sender und Empfänger eines Lichtgittersystems. Geht man von Montage von Lichtgittern vor und hinter der Tor-/ Türzarge aus, sind somit vier Komponenten anzubringen. Bei dieser Lösung verbleibt außerdem vor der Torkante ein nicht abgesicherter Bereich.

Die in der EP 1 470 314 beschriebene Lösung zielt auf die Absicherung des Vorfeldes ab und kann mit einem hohen Aufwand verbunden sein. Je nach Anbringung entstehen Sicherheitslücken vor der Torschließebene, die nur mit Zuhilfenahme von zwei Sensorsystemen abgedeckt werden können. Die Absicherung der Torschließebene ist nicht das primäre Ziel und entsprechend ist die Torschließebene nicht flächig abgedeckt.

Das Dokument US 2006/086895 A1 offenbart sämtliche Merkmale des Oberbegriffs des Anspruchs 1.

Aufgabe der Erfindung ist die Schaffung eines Verfahrens mit den Merkmalen des Oberbegriffes des anliegenden Anspruches 1, wobei der hohe technische Aufwand für die Anbringung von Sendern und Empfängern einer vergleichsweise großen Anzahl von Lichtschranken zur Bildung eines Lichtgitters innerhalb der Torschließebene erforderlich ist, vermieden wird und die Nachteile vermieden werden, die möglicherweise durch den Vorbeilauf des Torblattes in den zugehörigen Führungsmitteln an den Sendern und Empfängern vorbei und unmittelbar vor den Aufnahmeflächen der Sender und Empfänger auftreten könnten.

Diese Aufgabe wird erfindungsgemäß durch die kennzeichnenden Merkmale von Anspruch 1 gelöst.

Andererseits offenbart Dokument EP 1619469 A sämtliche Merkmale des unabhängigen Anspruchs 6.

Die Erfindung betrifft auch eine Einrichtung nach Anspruch 6 zur Durchführung des Verfahrens nach Anspruch 1. Vorteilhafte Ausgestaltungen und Weiterbildungen sind Gegenstand der Verfahrens-Unteransprüche und Einrichtung-Unteransprüche.

Gemäß einer bevorzugten Ausführungsform einer Einrichtung zur Durchführung des hier angegebenen Verfahrens ist der Entfernungsabtastdetektor, welcher den Entfernungs-Detektorstrahl erzeugt, ein Abtast-Laserscanner, welcher einen scharf gebündelten Lichtstrahl auf die vorlaufende Torkante und eine seitliche Begrenzung der Toröffnung richtet, wobei es vergleichsweise geringe Schwierigkeiten bereitet, den Abtaststrahl so scharf zu bündeln, dass er innerhalb der durch den Torbetrieb bedingten Toleranzgrenzen zuverlässig auf die vorlaufende Torkante trifft, und das reflektierte Signale des Entfernungsabtastdetektors zur Auswertung von dessen Laufzeitmessung mit einem hohen Maß an Genauigkeit herangezogen werden kann.

Es sei hier ausdrücklich erwähnt, dass in der nachfolgenden Beschreibung und in den Ansprüchen weitestgehend als zu überwachendes und zu steuerndes Verschlusselement ein Tor, welches sich vornehmlich in vertikaler Richtung in Schließstellung bewegt, behandelt ist. Die Erfindung umfasst jedoch auch horizontal bewegte Tore, Gatter, Baustellenabdeckungen, Schwimmbadabdeckungen, Ladelukenverschlüsse von Frachtschiffen und dergleichen mehr.

Nachfolgend wird die Erfindung anhand von Ausführungsbeispielen unter Bezugnahme auf die anliegenden Zeichnungen näher erläutert. Es stellen dar:

Fig. 1      eine schematische, perspektivische Ansicht eines vertikal in Öffnungsstellung oder in Schließstellung bewegbaren Roll-Segmenttores zur Durchführung des hier angegebenen Verfahrens;

Fig. 2      eine schematische Darstellung eines vertikal bewegbaren Tores zur Definition der geometrischen Größen.

Fig. 3      ein Diagramm mit Kennlinien zur Erläuterung der erfindungsgemäß zu gewinnenden Grenzwerte zum Vergleich mit Entfernungsmesswerten des Entfernungsabtastdetektors der hier angegebenen Einrichtung;

Fig. 4      eine schematische Abbildung einer Ausgestaltung der vorlaufenden Torkante zur Verbesserung von deren Reflexionseigenschaften;

Fig. 5 bis 8      schematische Abbildungen von Torsystemen oder Türsystemen, auf welche die hier angegebenen Maßnahmen zur Steuerung der jeweiligen Verschlusselemente anwendbar sind; und

Fig. 9      ein dreidimensional gestaltetes Diagramm zur Erläuterung von Grenzwertermittlungen durch den Entfemungs-Abtastdetektor.

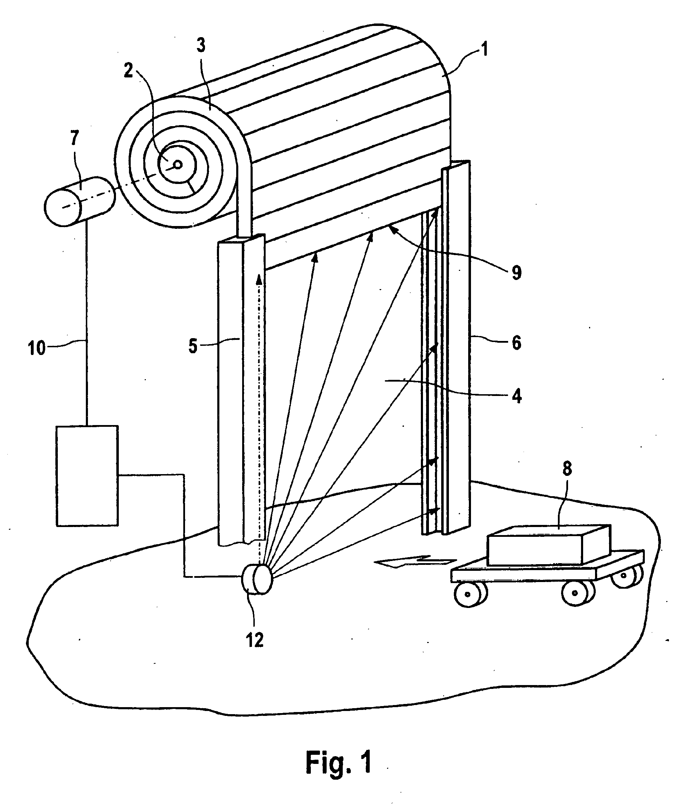

Fig. 1 zeigt in schematisierter perspektivischer Darstellung ein Segment-Rolltor 1, welches von einem auf eine Welle 2 gewickelten Haspel 3 zur Schließung einer Toröffnung 4 zwischen seitlichen Führungen 5 und 6 nach abwärts abgesenkt werden kann, indem die Welle 2 mittels eines Antriebs 7 in entsprechender Weise gedreht wird. Umgekehrt kann das Tor 1 durch Umsteuerung des Antriebs7 zur Freigabe der Toröffnung 4 zwischen den Führungen 5 und 6 angehoben werden.

Bewegt sich während des Schließens des Segmenttores 1 ein Hindernisobjekt 8 in Richtung auf die Toröffnung 4, so muss die Schließbewegung des Tores 1 durch Stillsetzen des Antriebs 7 oder gegebenenfalls durch Umsteuerung des Antriebs beendet werden, damit die untere oder vorlaufende Torkante 9 nicht auf das Hindernisobjekt 8 trifft und dieses beschädigt oder vom Hindernisobjekt 8 beschädigt wird.

Im Falle des Auftretens eines Hindemisobjektes 8 wird an den Antriebsmotor 7 des Segment-Rolltores 1 ein die Stillsetzung oder/und die Umsteuerung auslösendes Alarmsignal über eine Leitung 10, geliefert. Dieses Alarmsignal wird unabhängig von irgendwelchen Steuereinrichtungen, mit welchen beispielsweise eine Bedienungsperson den Antrieb 7 über die Torsteuerung einschaltet oder ausschaltet, von einer Überwachungs-Steuereinrichtung des Entfernungsabtastdetektors gebildet, worauf nachfolgend im Einzelnen eingegangen sei.

Nahe der unteren Ecke der Toröffnung 4, also nahe derjenigen Rechtecksecke der Toröffnung 4, welche mit Bezug auf die Abwärtsbewegung der unteren oder vorlaufenden Torkante 9 in der Schließstellung der vorlaufenden Torkante dieser nahe liegt, befindet sich ein Entfernungsabtastdetektor, welcher insgesamt mit einer Reihe verschiedener Komponenten mit 12 bezeichnet ist.

Der Entfernungsabtastdetektor enthält bei dem bevorzugten Ausführungsbeispiel unter anderem eine Lasersende- und Empfangseinheit, derer Sende- und Empfangsstrahlen mittels eines Ablenkmechanismus, bevorzugt realisiert durch einen rotierenden Spiegel, radial über einen Bereich von mindestens 90° abgelenkt werden. Der Ablenkmechanismus wird durch einen Antriebsmotor getrieben, wobei die Momentanstellung des Ablenkspiegels bei Abstrahlung und Empfang eines Sensorsignals kontinuierlich erfasst wird. Einer Steuereinheit werden die Ergebniswerte der Laufzeitmessung und der Winkelposition des Spiegels zugeführt, so dass daraus Wertepaare, bestehend aus Laufzeit und Richtung des Strahls, gebildet werden können.

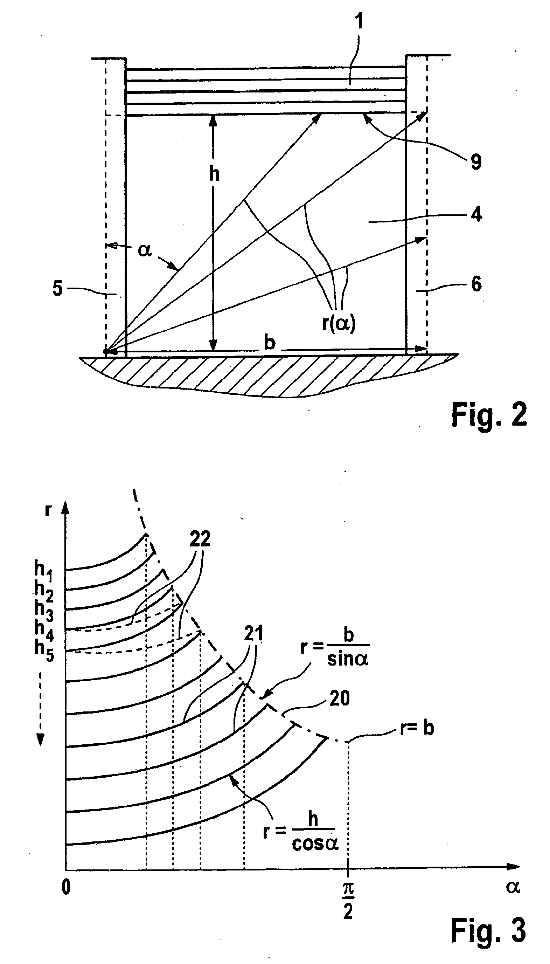

Es sei hier für die Erläuterung eines Ausführungsbeispiels angenommen, dass sich der Drehspiegel im Uhrzeigersinn dreht, derart, dass der Entfernungsmess-Detektorstrahl bei einem hier interessierenden Schwenkbereich von 0° bis 90° zunächst nach aufwärts weist und dann am Ende dieses Schwenkbereiches horizontal orientiert ist, wie dies in Fig. 2 gezeigt ist.

Im Einzelnen signalisiert der Entfernungsabtastdetektor 12 der Überwachungs-Steuereinrichtung zu Beginn eines Abtastzyklus, also dann, wenn der Abtastwinkel $\alpha$ 0° beträgt, eine Entfernung bis zum Auftreffen des Entfernungsmess-Detektorstrahles von h, nämlich der dann gerade festzustellenden Höhe der vorlaufenden Torkante 9 über dem Nullniveau, während dann, wenn am Ende des Abtastzyklus der Abtastwinkel $\alpha$ den Wert von 90° hat, der Entfernungs-Abtastdetektor 12 eine Entfernung r an die Überwachungs-Steuereinrichtung signalisiert, die selbstverständlich, wie aus Fig. 2 ersichtlich, der Breite b der Türöffnung entspricht.

Ein Unterschied der Abhängigkeiten der vom Entfernungsabtastdetektor 12 gelieferten Entfernungsdaten r während eines Abtastzyklus über 90° besteht abschnittsweise darin, dass während der Bewegung der vorlaufenden Torkante 9 in Schließrichtung sich von Abtastzyklus zu Abtastzyklus entsprechend geringer werdender Höhenwerte h die Entfernungsmesswerte r in Befolgung jeweils unterschiedlicher Kennlinien ändern, während dann, wenn bei Zwischenwerten des Abtastwinkels $\alpha$ schließlich der Entfernungsmess-Detektorstrahl auf die seitliche Begrenzung oder die Führung 6 trifft, von Abtastung zu Abtastung stets dieselbe Kennlinie für den Entfernungsmesswert r Gültigkeit hat, wie dies in Fig. 3 deutlich gemacht ist.

Die strichpunktierte Linie 20 in Fig. 3 liefert in dem Diagramm der Messwerte r in Abhängigkeit vom Abtastwinkel $\alpha$ für das Auftreffen des Entfernungsmess-Detektorstrahls auf die seitliche Führung 6 des Rolltores die Entfernungsmesswerte nach der Funktion

$$r = \frac{b}{\sin\alpha},$$

während für das Auftreffen des Entfernungsmess-Detektorstrahles auf die vorlaufende oder untere Torkante 9 das Kennlinienfeld mit den Funktionen

$$r = \frac{h}{\cos\alpha}$$

Gültigkeit hat, worin h eine zeitabhängige Größe ist.

Ohne hier auf eine genauere mathematische Darstellung einzugehen, deren Wiedergabe dem Fachmann keine Schwierigkeiten bereitet, ist jedenfalls unter Bezugnahme auf Fig. 3 festzustellen, dass dann, wenn man eine relativ zur Torabsenkgeschwindigkeit sehr hohe Winkelgeschwindigkeit des Entfernungsmess-Detektorstrahls annimmt, man annähernd von einer konstanten Höhe h der vorlaufenden oder unteren Torkante 9 während derjenigen Zeit ausgehen kann, während welcher der Entfernungs-Detektorstrahl auf eben diese untere Torkante 9, und noch nicht auf die seitliche Begrenzung 6 der Toröffnung 4 trifft, wofür die in Fig. 3 durch durchgezogene Linien dargestellten Kennlinien von

$r = \dfrac{h}{\cos\alpha}$ gelten, die in Fig. 3 mit 21 bezeichnet sind.

Kann aber die Absenkgeschwindigkeit des Rolltores 1 gegenüber der Abtastgeschwindigkeit oder der Winkelgeschwindigkeit des Entfernungs-Detektorstrahls nicht mehr vernachlässigt werden, dann erfahren die Kennlinien

$r = \dfrac{h}{\cos\alpha}$ eine Verschiebung während jedes Abtastzyklus nach abwärts entsprechend den in Fig. 3 eingezeichneten, unterbrochenen Linien 22.

Die jeweilige Position der Torschließkante ergibt, alle relevanten Wertepaare berücksichtigend, jeweils konstante Werte für die Torstellung h', nämlich

$$h' = r_1 \cos\alpha_1 = r_2 \cos\alpha_2 = \dots = r_n \cos\alpha_n$$

Man erkennt, dass dann, wenn der Entfernungsabtastdetektor 12 in die Überwachungs-Steuereinrichtung Entfernungsmesswerte eingibt, welche mit Entfernungsgrenzwerten verglichen werden, die in Speichermitteln in Übereinstimmung mit den zuvor in Zusammenhang mit Fig. 2 und Fig. 3 angestellten Überlegungen bereit gehalten werden, bei Gleichheit der Entfernungsmesswerte innerhalb vorgegebener Toleranzgrenzen mit den Entfernungsgrenzwerten ein regulärer Torschließvorgang erkannt wird und eine Stillsetzung des Antriebs durch ein Alarmsignal durch die Überwachungs-Steuereinrichtung nicht ausgelöst wird.

Immer dann aber, wenn ein gleichsam unerwarteter kleinerer Entfernungsmesswert von dem Entfernungsabtastdetektor 12 in einer bestimmten Winkelstellung des Entfernungsmess-Detektorstrahls signalisiert wird, dies auf ein Auftreffen des Entfernungsmess-Detektorstrahls auf ein Hindernis 8 hinweist, welches während der Schließbewegung des Tores in die Toröffnung 4 eingefahren ist. Diese Schlussfolgerung ist sowohl für die Abtastphase gültig, während welcher der Entfernungsmess-Detektorstrahl auf die vorlaufende oder untere Torkante 9 auftrifft, als auch während des Teils eines Abtastzyklus, während welchem der Entfernungsmess-Detektorstrahl auf die seitliche Begrenzung 6 der Toröffnung 4 auftrifft.

Somit ist es bei dem hier angegebenen System möglich, mit einer einzigen, in einer Ecke einer rechteckigen Türöffnung angeordneten Entfernungsmesseinrichtung, welche einen 90°-Abtastbereich innerhalb der Torschließebene erfasst, die gesamte Torschließebene zu überwachen, ohne über diese Torschließebene ein Lichtgitter zu spannen, welches aus einer Vielzahl von Lichtschranken besteht.

Ist der Antrieb 7 für das Tor 1 so ausgebildet, dass von einer konstanten Schließgeschwindigkeit der vorlaufenden Torkante 9 auszugehen ist, so kann in der Überwachungs-Steuereinrichtung eine automatische Weiterschaltung der bereitgehaltenen Entfernungs-Grenzwerte von Kennlinie 21 zu Kennlinie 21 oder von Kennlinie 22 zu Kennlinie 22 (letzteres im Falle einer vergleichsweise langsamen Abtastung des Entfernungsabtastdetektors 12) vorgesehen sein.

Gemäß einer vorteilhaften Weiterbildung des hier angegebenen Systems ist es jedoch auch möglich, mittels des Entfernungsmess-Detektorstrahles und des Entfernungsabtastdetektors 12 in Verbindung mit der Überwachungs-Steuereinrichtung selbst jeweils eine Geschwindigkeitsmessung bezüglich der Schließgeschwindigkeit der vorlaufenden oder unteren Torkante 9 vorzunehmen, wobei mit Bezug auf das Ausführungsbeispiel nach den Fig. 1 und 2 aufeinander folgende Messwerte für den Abtastwinkel $\alpha = 0$ (nämlich r = h) von aufeinander folgenden Abtastzyklen ausgewertet werden. Bei hohen Arbeitsgeschwindigkeiten der in der Überwachungs-Steuereinrichtung verwendeten elektronischen Schaltungen ist es auch möglich, für die Geschwindigkeitsmessung während ein und desselben Abtastzyklus auftretende Entfernungsmesswerte für den Abtastwinkel $\alpha = 0$ und für einen Abtastwinkel, welcher von 0 etwas verschieden ist, auszuwerten.

Unabhängig von der exakten mathematischen Erfassung der jeweils in Speichermitteln bereitzuhaltenden Entfernungsgrenzwerte können diese auch dadurch gewonnen werden, dass Initialisierungsläufe des Tores 1 in Schließbewegung durchgeführt werden und während dieser Initialisierungsläufe die jeweils bei einer bestimmten Abtast-Winkelgeschwindigkeit ermittelten Entfernungs-Messwerte gesammelt und in den Speichermitteln eingespeichert werden, wobei diese Speichermittel dann im Betrieb in Abhängigkeit von der jeweils durch den Entfernungs-Abtastdetektor gemessenen Torstellung und gegebenenfalls auch in Abhängigkeit von der ermittelten Torgeschwindigkeit adressiert werden, um die Entfernungsgrenzwerte für den Vergleich mit den jeweiligen Entfernungsmesswerten wieder zu entnehmen.

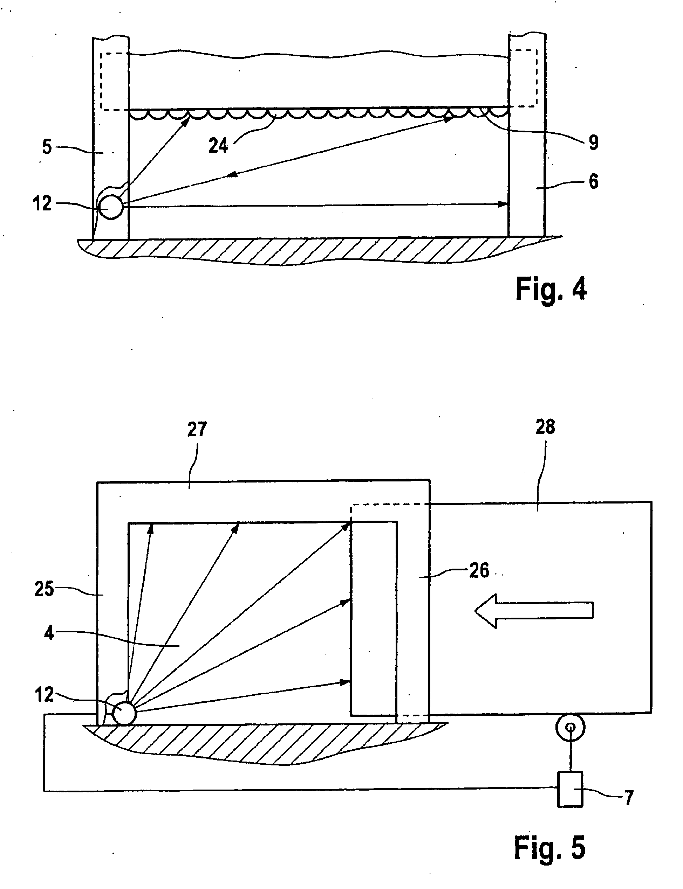

Fig.4 zeigt eine Ausführungsform, bei welcher zur Verbesserung des Reflexionsverhaltens der vorlaufenden oder unteren Torkante 9 gegenüber dem Entfernungs-Detektorstrahl insbesondere in Betriebsphasen, in welchen die vorlaufende Torkante 9 sich nahe an der Schließstellung befindet, ein Wellenprofil oder Zackenprofil befestigt ist, welches in Fig. 4 mit 24 bezeichnet ist.

Die Figuren 5 bis 8 zeigen Tore bzw. Türen bzw. Verschlusselemente, auf welche das hier angegebene System anwendbar ist. Auch in den Fig. 5 bis 8 sind für die Bezeichnung entsprechender Komponenten in den Fig. 1 bis 4 jeweils gleiche Bezugszahlen verwendet.

Bei der Ausführungsform nach Fig. 5 ist der Abtastmechanismus, also beispielsweise ein Drehspiegel des Entfernungs-Abtastdetektors 12 ähnlich wie bei der Ausführungsform nach Fig. 1 in einer unteren Ecke der Toröffnung 4 angeordnet und befindet sich nahe einer die Toröffnung begrenzenden Stütze 25, welche einer geschlitzten Stütze 26 über die Toröffnung 4 hinweg gegenübersteht, wobei die Stützen 25 und 26 eine mit einer Rollführung versehenen Traverse 27 tragen, an welcher ein Torblatt oder Türblatt 28 aufgehängt und mittels eines Antriebs 7, welcher in Fig. 5 nur schematisch angegeben ist, zum Freigeben oder Verschließen der Toröffnung 4 verschiebbar ist. Die Drehrichtung des Drehspiegels ist beispielsweise gegen den Uhrzeigersinn mit Bezug auf die in Fig. 5 gezeigte Stellung gewählt, derart, dass der Entfernungs-Detektorstrahl zunächst auf die untere vorlaufende Kante des Torblattes 28 auftrifft und dabei, wie zuvor erläutert, entweder von Abtastzyklus zu Abtastzyklus eine Geschwindigkeitsmessung der Schließbewegung des Torblatts 28 vornimmt oder durch Vergleich von in geringem Schwenkregelbereich nebeneinander liegenden Entfernungsmesswerten innerhalb ein- und desselben Abtastzyklus diese Geschwindigkeitsmessung vornimmt, um unabhängig hiervon die im Zusammenhang mit Fig. 3 erläuterte Bewertung der Entfernungsgrenzwertkennlinien vorzunehmen. Nach einer gewissen Dauer der Verschwenkung des Entfernungs-Detektorstrahls trifft dieser dann auf die Begrenzung durch die Traverse 27 auf, so dass die Entfernungsmesswerte den Entfernungsmess-Grenzwerten entsprechend Kennlinie 20 von Fig. 3 folgen.

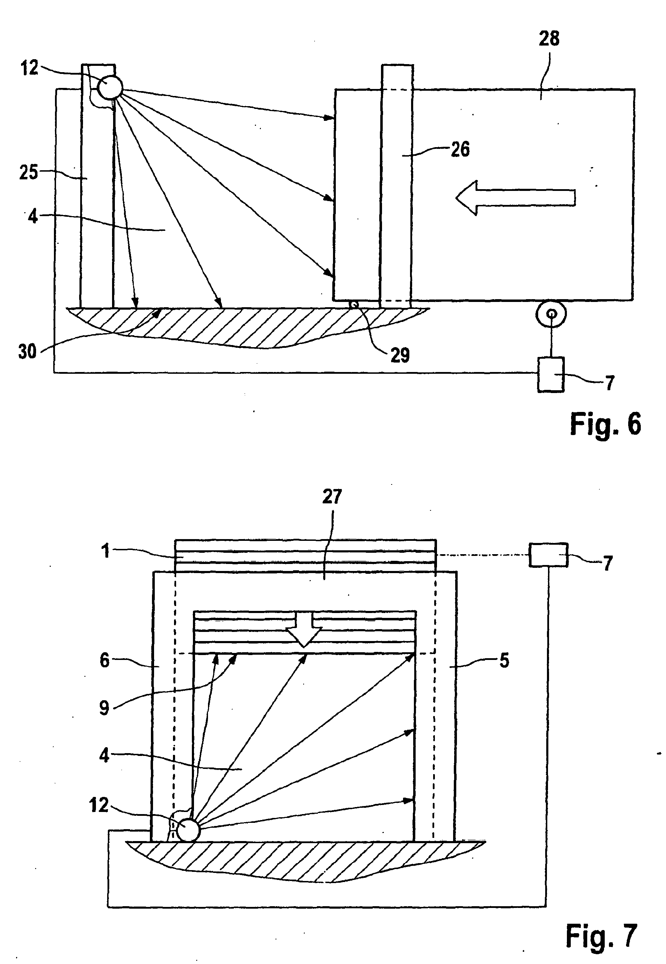

Wird gemäß Fig. 6 das hier angegebene System auf ein horizontal bewegbares Torblatt 28 angewendet, das nicht an einer oberen Traverse aufgehängt ist, sondern sich beispielsweise mit Rollen gegen eine ebene Unterlage abstützt, wie in Fig. 6 schematisch bei 29 und 30 angedeutet ist, dann ist der Abtastmechanismus, beispielsweise der Drehspiegel des EntfemungsAbtastdetektors 12 am oberen Ende der Stütze 25 anzuordnen, wobei der Entfernungsmess-Detektorstrahl zunächst horizontal auf die obere Ecke an der vorlaufenden Kante des Türblattes 28 auftrifft, danach entsprechend den Überlegungen, wie sie anhand von Fig. 3 bezüglich des Kennlinienfeldes 21 und 22 der Entfernungs-Grenzwerte auf die vorlaufende Kante auftrifft, während der Entfernungsmess-Detektorstrahl sich im Uhrzeigersinn verschwenkend längs der Torkante nach abwärts läuft und dann schließlich auf die ebene Unterlage oder den Untergrund 30 des horizontal verfahrbaren Türblattes 28 auftrifft und dann entsprechend der Überlegungen gemäß Fig. 3 der Kennlinie 20 bis in eine Vertikalstellung nach abwärts gerichtet gelangt.

Die Ausführungsform nach Fig. 7 unterscheidet sich nicht grundsätzlich von dem in Fig. 1 verdeutlichten System.

Die Darstellung von Fig. 7 macht deutlich, dass selbstverständlich ein Drehspiegel oder andere Ablenkmittel des EntfernungsAbtastdetektors 12 auch in der jeweils anderen, unteren Ecke der rechteckigen, von dem Segmenttor 1 abzudeckenden Türöffnung 4 angeordnet werden kann, derart, dass die Fig. 7 gegenüber der Fig. 1 eine Ansicht beispielsweise von der jeweils anderen Seite der Türblattebene zeigt, wie man durch die Bezeichnung der Führungen 5 und 6 in Fig. 7 im Unterschied von der Bezeichnung der Führungen 5 und 6 in Fig. 1 erkennen kann. Weiter unterscheidet sich die Ausführungsform nach Fig. 7 von derjenigen nach Fig. 1 dadurch, dass die Führungen 5 und 6 bei der Ausführungsform nach Fig. 7 durch eine geschlitzte Traverse 27 verbunden sind, durch deren Schlitzöffnung hindurch das Torblatt durch den Antrieb 7 in Schließstellung abgesenkt oder in Öffnungsstellung angehoben wird.

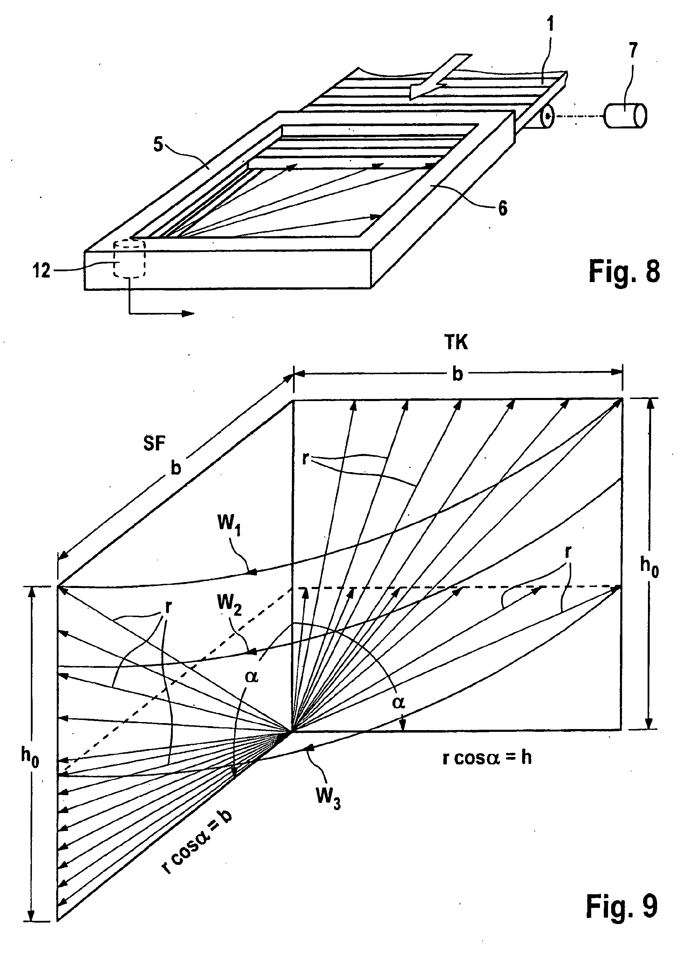

Es ist jedoch zu bemerken, dass, wie in Fig. 8 deutlich gemacht ist, die Lage der Ebene der mit dem hier angegebenen System verschließbaren rechteckigen Toröffnung nicht auf eine vertikale Ebene beschränkt ist. Diese kann auch einen bestimmten Winkel zur Vertikalen einnehmen oder horizontal orientiert sein, wie in Fig. 8 deutlich gemacht ist. Solche Öffnungen unter Vermeidung der Kollision der vorlaufenden Torkante mit einem Hindernisobjekt durch entsprechende Überwachung zu verschließen, kann bei einer verfahrbaren Baustellenabdeckung, bei Schwimmbadabdeckungen, bei Ladelukenabdeckungen von Frachtschiffen und dergleichen von Interesse sein.

Bei allen zuvor beschriebenen Ausführungsformen kann es zweckmäßig sein, anstelle exakter geometrischer Überlegungen zur Ermittlung der bereitgehaltenen Entfernungsgrenzwerte, welche mit den tatsächlich ermittelten Entfernungsmesswerten aufgrund des Entfernungsmess-Detektorstrahls verglichen werden, den Entfernungsmess-Detektorstrahl über wiederholte Abtastzyklen längs einer vorlaufenden Torkante und längs einer seitlichen Begrenzung der Torführung wegzuführen und dabei jeweils Entfernungsmesswerte einzusammeln, welche dann mit bestimmter Toleranz als Entfernungsmess-Grenzwerte in einen Speicher eingespeichert werden. Dieser Speicher liefert dann je nach einer möglicherweise konstant vorgegebenen Torschließgeschwindigkeit oder je nach einer von Abtastzyklus zu Abtastzyklus ermittelten Torschließgeschwindigkeit oder je nach einer kurzzeitig zu Beginn eines Abtastzyklus ermittelten Torgeschwindigkeit aufgrund entsprechender Adressierung während der Abtastung der vorlaufenden Torkante gerade diejenigen Grenzwerte der Länge des Entfernungsmess-Abtaststrahls, welche dann, wenn sie unterschritten werden, auf ein Hindernisobjekt hinweisen und die Stillsetzung oder/und die Umsteuerung des Motorantriebs des Torblattes oder Tores bewirken. Während des Abtastens des Entfernungsmess-Detektorstrahls längs der seitlichen Geradführung des Tores bleiben die bereitgehaltenen Grenzwerte über demjenigen Abschnitt der Kennlinie 20 nach Fig. 3 unverändert, welcher zwischen dem Treffpunkt der aktuellen Kennlinie 21 oder 22 nach Fig. 3 mit der einzigen Kennlinie 20 bis hin zu einer Länge des Entfernungsmess-Abtaststrahles r gleich der Breite b der Toröffnung verbleibt.

In Fig. 9 ist schließlich noch ein dreidimensional gestaltetes Diagramm gezeigt, welches die Überlegungen bezüglich der dem Entfernungsabtastdetektor 12 bereitzustellenden Grenzwerte erleichtert. Dies müssen nämlich nicht notwendigerweise Grenzwertkennlinien sein, wie sie etwa in Fig. 3 dargestellt und oben erläutert wurden.

Nachdem die Abtastgeschwindigkeit oder Winkelgeschwindigkeit des Entfernungsabtastdetektors 12 außerordentlich hoch sein kann, derart, dass während eines Abtastumlaufes des Entfernungsabtastdetektors 12 das sich schließende Tor als stillstehend angesehen werden kann, die vorlaufende Torkante also eine bestimmte Höhenstellung h, $h_1$, $h_2$ und dergleichen während des Umlaufs einnehmend angesehen werden kann, ist es durchaus möglich, in dem Entfernungsabtastdetektor 12 bereits die trigonometrischen Behandlungen der ermittelten Größen r vorzunehmen und dann mit konstanten Grenzwerten zu vergleichen.

Fig. 9 zeigt eine Diagrammebene TK entsprechend der Ebene der sich absenkenden Torkante, wobei die Breite der Toröffnung mit b bezeichnet ist.

Während der Detektorstrahl die in einer bestimmten Höhe befindliche untere Torkante abtastet, ergibt sich durch Multiplikation des vom Entfernungsabtastdetektor ermittelten Wertes für r und dem augenblicklichen Abtastwinkel bei Abtastung im Gegenuhrzeigersinn durch Multiplikation von r $\cos\alpha$ stets der konstante Wert h.

Trifft dann der Abtaststrahl auf die Ecke zwischen der vorlaufenden Torkante und der dem Entfernungsabtastdetektor gegenüberliegenden Begrenzung der Toröffnung, so gilt für die folgende Grenzwertberechnung die Diagrammebene SF, welche in Fig. 9 im 90°-Winkel relativ zu der Ebene TK gezeichnet ist und welche die Verhältnisse bei Auftreffen des Detektorstrahls auf die seitliche Führung der Torebene wiedergibt.

Hier gilt für den Detektorstrahl, dessen Länge mit dem Abtastwinkel cosa multipliziert wird, dass sich stets die Größe b ergibt, was von dem Auftreffen des Detektorstrahls auf die Ecke zwischen vorlaufender Torkante und seitlicher Toröffnungsbegrenzung bis hin zur Orientierung des Detektorstrahls in horizontaler Richtung gilt.

In der Betrachtung ist also immer dann, wenn der Detektorstrahl auf die Ecke zwischen vorlaufender Torkante und seitlicher Begrenzung der Toröffnung trifft, von der Diagrammebene TK auf die Diagrammebene SF umzuwechseln, wie durch bogenförmige Pfeile $W_1$, $W_2$ und $W_3$ in Fig. 9 für jeweils kleiner werdende Höhen h der vorlaufenden Torkante über Grund angedeutet ist.

Durch entsprechende Multiplikationsregel in dem Entfernungsabtastdetektor abhängig von der jeweils augenblicklichen Höhe der vorlaufenden Torkante, wird erreicht, dass der bereitzuhaltende Grenzwert, mit welchem ein Auswertergebnis der Entfernungsmessung verglichen wird, eine Konstante ist.

## Patentansprüche

1. Verfahren zur Steuerung eines Tores (1), welches mittels eines Motorantriebs (7) an mindestens einer Geradführungseinrichtung (5, 6) über eine rechteckige Toröffnung (4) hinweg von einer Öffnungsstellung in eine Schließstellung verfahrbar ist, und zwar in der Weise, dass während der Bewegung des Tores in die Schließstellung ein Eindringen eines Hindernisobjektes (8) in die jeweils verbleibende Toröffnung aufgrund einer Detektorstrahlunterbrechung detektiert wird und eine Stillsetzung oder/und Umsteuerung des Motorantriebs (7) bewirkt, wobei nahe einer Rechtecksecke der Toröffnung mittels eines Entfernungsmess-Abtastdetektors (12) ein Entfernungsmess-Detektorstrahl über einen Winkelbereich von vorzugsweise 90° verschwenkt wird, dessen während dieser Schwenkbewegung detektierte Entfernungsmesswerte oder trigonometrisch auf die Tordimensionen umgerechnete Entfernungsbezugswerte jeweils mit dem Auftreffen des Entfernungsmess-Detektorstrahls auf die vorlaufende Torkante (9) und auf eine zur Torlaufrichtung parallele Begrenzung der rechteckigen Türöffnung (4) in Speichermitteln bereitgehaltenen entsprechenden Entfernungsmess-Grenzwerten bzw. solchen trigonometrisch auf die Tordimension umgerechneten Entfernungsmess-Grenzbezugswerten verglichen werden und wobei beim Auftreffen von demgegenüber kleineren Entfernungsmesswerten ein eine Stillsetzung oder/und Umsteuerung auslösendes Alarmsignal erzeugt wird, **dadurch gekennzeichnet, dass** der Entfernungsmess-Detektorstrahl in der Torbewegungsebene nahe der Rechtecksecke der Toröffnung verschwenkt wird, welche mit Bezug auf die Schließbewegung in der Schließstellung der vorlaufenden Torkante (9) nahe liegt.

2. Verfahren nach Anspruch 1, **dadurch gekennzeichnet, dass** die Entfemungsmess-Grenzwerte, welche für Entfernungs-Messwerte bereitgehalten werden, die beim Auftreffen auf die vorlaufende Torkante (9) gesammelt werden, einer von der Torlaufgeschwindigkeit abhängigen Modulation unterzogen werden.

3. Verfahren nach Anspruch 2, **dadurch gekennzeichnet, dass** die Bewertung der für die Entfernungsmesswerte bezüglich der vorlaufenden Torkante (9) bereitgehaltenen Entfernungsmess-Grenzwerte abhängig von der Torlaufgeschwindigkeit auch während einer einzelnen Schwenkbewegung des Entfernungsmess-Detektorstrahls über den vorzugsweise 90°-Schwenkbereich erfolgt.

4. Verfahren nach einem der Ansprüche 1 bis 3, **dadurch gekennzeichnet, dass** die Entfernungsmess-Grenzwerte durch Initialisierungsläufe des Tores (1) in Schließbewegungen gesammelt und in einem torgeschwindigkeitsabhängig adressierbaren Speicher bereitgehalten werden.

5. Verfahren nach einem der Ansprüche 2 bis 4, **dadurch gekennzeichnet, dass** zur Modulation der Entfernungsmess-Grenzwerte eine Geschwindigkeitsmessung durch den Entfernungsmess-Detektorstrahl entsprechend von dessen Auftreffen auf die vorlaufende Torkante (9) selbst entweder für kleine Schwenkbereiche des Entfernungsmess-Detektorstrahls in derselben Abtastperiode oder aber von Abtastperiode zu Abtastperiode erfolgt.

6. Einrichtung zur Durchführung des Verfahrens nach einem der Ansprüche 1 bis 5, mit einem Entfernungs-Abtastdetektor (12), welcher sich in einer Ecke der rechteckigen Türöffnung (4) befindet und einen Drehspiegel (15) aufweist, welcher mit einem Laser-Radardetektor zusammenwirkt, **dadurch gekennzeichnet, dass** die Ecke in der Torschließstellung der mit Bezug auf die Torschließbewegung vorlaufenden Torkante nahe liegt.

7. Einrichtung nach Anspruch 6, **dadurch gekennzeichnet, dass** an der vorlaufenden Torkante ein mit Wellenprofil oder Zackenprofil versehener Reflexionsstrei fen (24) befestigt ist, welcher auch bei großen Winkeln des Entfernungsmess-Detektorstrahls relativ zum Lot der vorlaufenden Torkante eine ausreichende Reflexion der vorlaufenden Torkante sicherstellt (Fig. 4).

## Claims

1. A method for controlling a gate (1) which is adapted to be displaced by means of a motorized drive mechanism (7) on at least one straight guide means (5, 6) across a rectangular gate aperture (4) from an opened position into a closure position, in such a way that during the movement of the gate into the closure position an intrusion by an obstructing object (8) into the respective remaining gate aperture is detected as a result of a detector beam interruption and brings about a deactivation or/and reversal of the motorized drive mechanism (7), wherein in proximity of a corner of the rectangle of the gate aperture, a distance measurement detector beam is scanned across an angular range of preferably 90 deg. by means of a distance measurement scanning detector (12), with distance measurement values of said distance measurement detector detected during this scanning movement or distance reference values trigonometrically converted to the gate dimensions being compared in each case, upon impact of the distance measurement detector beam on the leading gate edge (9) and on a boundary of the rectangular door aperture (4) parallel to the moving direction of the gate, to respective distance measurement limit values stocked in storage means or to such distance measurement limit reference values trigonometrically converted to the gate dimension, and wherein upon impact of distance measurement values that are smaller in comparison with these, an alarm signal triggering a deactivation or/and reversal is generated, **characterized in that** the distance measurement detector beam is scanned in the plane of gate movement close to the corner of the rectangle of the gate aperture which is, in the closure position, situated in the vicinity of the leading gate edge (9) with regard to the closing movement.

2. The method according to claim 1, **characterized in that** the distance measurement limit values which are stocked for distance measurement values gathered upon impact on the leading gate edge (9) are subjected to a modulation that is dependent on the gate movement velocity.

3. The method according to claim 2, **characterized in that** the evaluation of the distance measurement limit values stocked for the distance measurement values with regard to the leading gate edge (9) is also performed, in dependence on the gate movement velocity, during a single scanning movement of the distance measurement detector beam across the scanning range of preferably 90 deg.

4. The method according to any one of claims 1 to 3, **characterized in that** the distance measurement limit values are gathered with the aid of initialization runs of the gate (1) in closing movements and stocked in a storage adapted to be addressed in dependence on the gate velocity.

5. The method according to any one of claims 2 to 4, **characterized in that** for the modulation of the distance measurement limit values a velocity measurement by the distance measurement detector beam in accordance with its impact on the leading gate edge (9) itself is performed either for small scanning ranges of the distance measurement detector beam within a same scan interval or, on the other hand, from scan interval to scan interval.

6. A device for implementing the method according to any one of claims 1 to 5, comprising a distance scanning detector (12) situated in a corner of the rectangular door aperture (4) and having a rotary mirror (15) which interacts with a laser-radar detector, **characterized in that** the corner is, in the gate closure position, situated close to the leading gate edge with regard to the gate closing movement.

7. The device according to claim 6, **characterized in that** a reflective strip (24) provided with a wave profile or serrated profile is fastened to the leading gate edge, which ensures a sufficient reflection of the leading gate edge even at large angles of the distance measurement detector beam relative to the plumb line of the leading gate edge (Fig. 4).

**Revendications**

1. Procédé de commande d'une porte (1) qui peut être déplacée à l'aide d'un entraînement motorisé (7) sur au moins un dispositif de guidage droit (5, 6) au-delà d'une ouverture de porte (4) rectangulaire d'une position d'ouverture à une position de fermeture, et ce de telle manière que pendant le mouvement de la porte dans la position de fermeture, une pénétration d'un objet obstacle (8) dans l'ouverture de porte restante respectivement est détectée en raison d'une interruption du faisceau de détecteur et un arrêt et/ou un changement de sens de l'entraînement motorisé (7) est provoqué, près d'un coin rectangulaire de l'ouverture de porte, un faisceau de détecteur de mesure de distance étant pivoté sur une plage angulaire de préférence de 90° à l'aide d'un détecteur de balayage de mesure de distance (12), dont les valeurs de mesure de distance détectées pendant ce mouvement de pivotement ou les valeurs de référence de distance converties de manière trigonométrique en dimensions de la porte sont comparées respectivement avec l'incidence du faisceau de détecteur de mesure de distance sur l'arête de porte avant (9) et sur une délimitation parallèle au sens de marche de la porte de l'ouverture de porte (4) rectangulaire avec des valeurs limites de mesure de distance correspondantes disponibles dans des moyens d'enregistrement ou de telles valeurs de référence limites de mesure de distance converties de manière trigonométrique en dimension de la porte et lors de l'incidence, un signal d'alarme déclenchant un arrêt et/ou un changement de sens étant généré par des valeurs de mesure de distance plus petites par rapport à celles-ci, **caractérisé en ce que** le faisceau de détecteur de mesure de distance est pivoté dans le plan de mouvement de porte près du coin rectangulaire de l'ouverture de porte qui se trouve à proximité par rapport au mouvement de fermeture dans la position de fermeture de l'arête de porte avant (9).

EP 2 212 498 B1

**2.** Procédé selon la revendication 1, **caractérisé en ce que** les valeurs limites de mesure de distance qui sont disponibles pour des valeurs de mesure de distance qui sont accumulées lors de l'incidence sur l'arête de porte avant (9), sont soumises à une modulation dépendant de la vitesse de la porte.

**3.** Procédé selon la revendication 2, **caractérisé en ce que** l'évaluation des valeurs limites de mesure de distance disponibles pour les valeurs de mesure de distance par rapport à l'arête de porte avant (9) est aussi réalisée en fonction de la vitesse de la porte pendant un mouvement de pivotement individuel du faisceau de détecteur de mesure de distance sur la zone de pivotement de 90° de préférence.

**4.** Procédé selon l'une quelconque des revendications 1 à 3, **caractérisé en ce que** les valeurs limites de mesure de distance sont accumulées par des marches d'initialisation de la porte (1) en mouvements de fermeture et sont disponibles dans une mémoire adressable en fonction de la vitesse de la porte.

**5.** Procédé selon l'une quelconque des revendications 2 à 4, **caractérisé en ce que** pour la modulation des valeurs limites de mesure de distance, une mesure de vitesse est réalisée par le faisceau de détecteur de mesure de distance selon son incidence sur l'arête de porte avant (9) même pour de petites zones de pivotement du faisceau de détecteur de mesure de distance dans la même période de balayage ou de période de balayage en période de balayage.

**6.** Dispositif de réalisation du procédé selon l'une quelconque des revendications 1 à 5, avec un détecteur de balayage de distance (12) qui se trouve dans un coin de l'ouverture de porte rectangulaire (4) et présente un miroir tournant (15) qui coagit avec un détecteur radar à laser, **caractérisé en ce que** le coin se trouve à proximité dans la position de fermeture de la porte de l'arête de porte avant par rapport au mouvement de fermeture de porte.

**7.** Dispositif selon la revendication 6, **caractérisé en ce qu'**une bande réfléchissante (24) pourvue d'un profilé ondulé ou profilé dentelé est fixée sur l'arête de porte avant, laquelle assure également une réflexion suffisante de l'arête de porte avant pour de grands angles du faisceau de détecteur de mesure de distance par rapport à la verticale de l'arête de porte avant (figure 4).

**Fig. 1**

**Fig. 2**

$$r = \frac{b}{\sin\alpha}$$

$$r = b$$

$$r = \frac{h}{\cos\alpha}$$

**Fig. 3**

**Fig. 4**

**Fig. 5**

Fig. 6

Fig. 7

**Fig. 8**

**Fig. 9**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0902158 A
- EP 1470314 A
- US 2006086895 A1
- EP 1619469 A